# EUROPÄISCHE PATENTSCHRIFT

(11) **EP 0 722 687 B1**
(45) Veröffentlichungstag und Bekanntmachung des Hinweises auf die Patenterteilung: **29.12.1999**
(21) Anmeldenummer: 96100657.4
(22) Anmeldetag: 17.01.1996
(51) Int. Cl.: A47J 27/00, A47J 37/10

(54) **Schüssel aus Metallblech, insb. für Speisenzubereitung in Haushalt und Restaurant und Verfahren zur Herstellung einer Schüssel**
Vessel made from metal plate, in particular for preparing food at home or in restaurants and method for producing a vessel
Récipients en métal, en particulier pour préparer de la nourriture à la maison et au restaurant et méthode pour fabriquer un récipient

(30) Priorität: 20.01.1995 DE 19501697
(43) Veröffentlichungstag der Anmeldung: 24.07.1996
(73) Patentinhaber: Rösle Metallwarenfabrik GmbH & Co. KG, D-87610 Marktoberdorf (DE)
(72) Erfinder: Schäfer, Erhard, Dipl.-Volkswirt, D-87616 Marktoberdorf (DE)
(74) Vertreter: Weickmann, Heinrich, Dipl.-Ing.

(56) Entgegenhaltungen:
- WO-A-89/01901
- DE-A- 1 679 133
- DE-B- 1 103 874
- DE-U- 7 203 720
- DE-U- 8 622 923
- FR-A- 524 585
- FR-A- 1 090 116

## Beschreibung

Die Erfindung betrifft eine Schüssel nach dem Oberbegriff des Anspruchs 1. Unter einer Schüssel versteht man ein weites Gefäß, besonders zum Anrichten und Auftragen von Speisen (siehe Wahrig, Deutsches Wörterbuch, Ausgabe 1986, Seite 1149, mittlere Spalte).

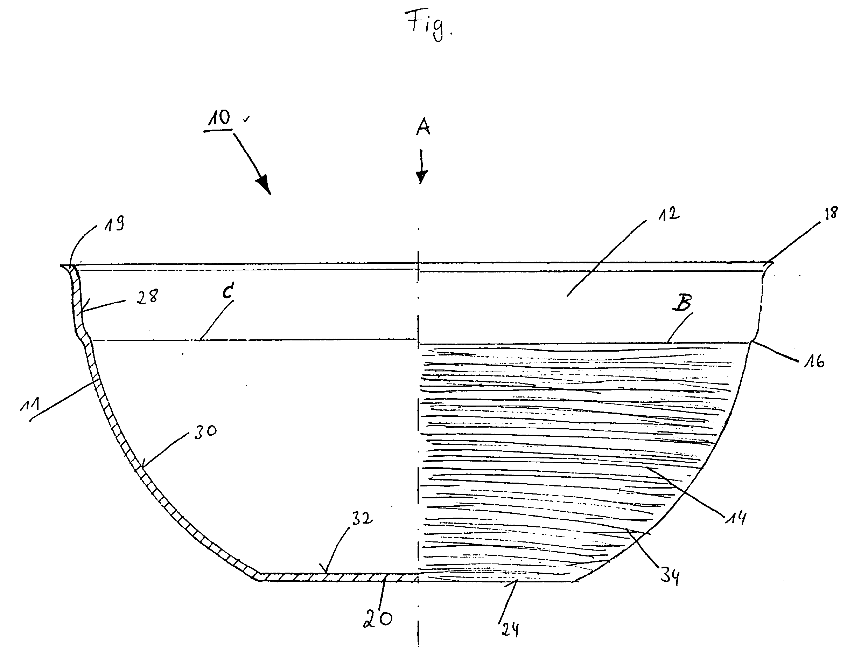

Aus der DE-B-1 103 874 ist ein dort als "Bräter" oder "Kasserole" bezeichneter Behälter für Kochzwecke offenbart, welcher einen über die Außenoberfläche einer randnahen Mantelzone des Mantelteils radial auswärts vorspringenden Randvorsprung aufweist, wobei die an den Randvorsprung angrenzende Außenoberfläche der randnahen Mantelzone von der Außenoberfläche einer zum Pol oder Bodenteil hin anschließenden randferneren Mantelzone durch eine Stufe abgegrenzt ist (siehe Fig. 4 der DE-B-1 103 874).

Aus der WO 89 01 901 ist ein schüsselartiger Nahrungsmittelbehälter bekannt, bei dem an die Außenoberfläche der randnahen Mantelzone des Mantelteils zum Pol - oder Bodenteil - hin eine gerippte randfernere Mantelzone angrenzt, deren Rippung an der Außenoberfläche der randferneren Mantelzone, dort in vertikaler Richtung verlaufend, erkennbar ist. Zwischen der randnahen Mantelzone und der randferneren Mantelzone ist dort, wo die Rippung nach unten verlaufend beginnt, eine Stufe ausgebildet. Die Rippung ist durch spanlose Blechverformung der randferneren Mantelzone gebildet, ebenso wie die Stufe. Die Stufe und die Rippung entstehen beide bei der Ausformung der Mantelfläche.

Der Erfindung liegt die Aufgabe zugrunde, eine Schüssel nach dem Oberbegriff des Patentanspruchs 1 so auszubilden, daß sich einerseits die Schüssel bei ihrer Benutzung leicht festhalten läßt, daß sie dennoch gut zu reinigen ist und daß sie in ihrem optischen Erscheinungsbild herkömmlichen Schüsseln mit Hochglanz auf der gesamten Außenoberfläche zumindest nicht nachsteht.

Zur Lösung dieser Aufgabe wird erfindungsgemäß vorgeschlagen, daß die Stufe oder Schwelle die Grenze zwischen größerer, durch Abrasivbehandlung erhaltener Oberflächenrauheit der Außenoberfläche in der randferneren Mantelzone und geringerer Oberflächenrauheit der Außenoberfläche in der randnahen Mantelzone bildet.

Durch die größere Rauheit in der Außenoberfläche der randferneren Mantelzone wird erreicht, daß sich die Schüssel dort leichter festhalten läßt, gleichgültig ob - bei kleinen Schüsseln - die Außenoberfläche der randferneren Mantelzone mit einer offenen Hand und gespreizten Fingern erfaßt wird oder - insbesondere bei größeren Schüsseln - die Schüssel mit ihrem Randvorsprung gegen den Körper des Benutzers dadurch gepreßt wird, daß die offene Hand an dem körperfernen Bereich der Außenoberfläche der randferneren Mantelzone angelegt wird.

Zwar ist wegen der größeren Rauheit der Außenoberfläche der randferneren Mantelzone die Reinigung geringfügig schwieriger als an der Außenoberfläche der randnahen Mantelzone geringerer Oberflächenrauheit. Indes ist zu berücksichtigen, daß die Außenoberfläche der randferneren Mantelzone und ggf. die Außenoberfläche des Bodenteils formbedingt relativ leicht zu reinigen sind, so daß dort eine geringfügige Erschwerung der Reinigungsarbeiten in Kauf genommen werden kann. Da andererseits die Außenoberfläche der randnahen Mantelzone und des Randvorsprungs, die wegen des radial auswärts vorspringenden Randvorsprungs formbedingt schwieriger zu reinigen ist, geringere Oberflächenrauheit aufweist, bleibt auch in dieser Außenoberfläche insgesamt eine akzeptable Reinigungsmöglichkeit bestehen.

Die Ausführung der Außenoberfläche der randnahen Mantelzone mit geringerer Oberflächenrauheit und der randferneren Mantelzone mit größerer Oberflächenrauheit erfordert unterschiedliche Oberflächenbehandlung beider Oberflächenbereiche. Diese unterschiedliche Behandlung kann dank der Schwellen- oder Stufenbildung relativ leicht so durchgeführt werden, daß für einen Betrachter eine scharfe und regelmäßige Grenze zwischen den beiden Oberflächenbereichen sichtbar ist, ohne daß es komplizierter und verteuernder Abdeckmaßnahmen des jeweils einen Oberflächenbereichs während der Behandlung des jeweils anderen Oberflächenbereichs bedarf. Zum Beispiel kann man, wenn die Außenoberfläche der randnahen Mantelzone radial auswärts gegenüber der Außenoberfläche der randferneren Mantelzone vorspringt, die auf hohe Oberflächenrauheit abzielende Behandlung der Außenoberfläche der randferneren Mantelzone zuerst durchführen, ohne daß die Gefahr besteht, daß die Rauheit sich über die Stufe in die Außenoberfläche der randnahen Mantelzone hinein sichtbar fortsetzt. Andererseits kann man nach durchgeführter Rauhung der Außenoberfläche der randferneren Mantelzone eine auf geringe Rauheit abzielende Behandlung in der Außenoberfläche der randnahen Mantelzone leicht durchführen, ohne daß Rauheitsverlust im angrenzenden Bereich der Außenoberfläche der randferneren Mantelzone eintritt und ohne daß die empfindlicheren, auf geringe Rauheit abgestimmten Behandlungsmittel für die Außenoberfläche der randnahen Mantelzone vorzeitig unbrauchbar werden.

Wie schon im Rahmen des vorstehenden Beispiels angedeutet, ist es vorteilhaft, wenn die Stufe dadurch gebildet ist, daß die Außenoberfläche der randnahen Mantelzone radial auswärts gegenüber der Außenoberfläche der randferneren Mantelzone versetzt ist.

Der Rand der Schüssel ist bevorzugt nicht voll eingerollt, sondern durch Radialauswärtsbiegung des Metallblechs gebildet. Dadurch wird zum einen die Reinigung in der Außenoberfläche der randnahen Mantelzone und an der Außenseite des Randvorsprungs erleichtert und zum anderen die ergonomische Handhabung der Schüssel weiter verbessert, weil nämlich der scharfkantige Rand dann mit sicherem Halt gegen den Körper des Benutzers angedrückt werden kann.

Die Reinigung an der Außenoberfläche der randnahen Mantelzone kann noch weiter dadurch erleichtert werden, daß die Radialauswärtsbiegung des Randvorsprungs mit - im achsenthaltenden Schnitt betrachtet - stetigem Krümmungsverlauf an den Schüsselmantel anschließt. Um das Ausgießen flüssigen Guts aus der Schüssel zu vergleichmäßigen, wird vorgeschlagen, daß der Randvorsprung im Bereich einer Randkante annähernd tangential an einer zur Schüsselachse orthogonalen, virtuellen Randebene anliegt.

Gelegentlich wird der Benutzer das Bedürfnis haben, die Schüssel mit ihrem Rand zwischen dem Daumen einerseits und den Fingern einer Hand andererseits festzuhalten. Diese Möglichkeit der Festhaltung kann dadurch erreicht werden, daß die Stufe durch Radialauswärtsversetzung des die randnahe Mantelzone bildenden Metallblechs gegenüber dem die randfernere Mantelzone bildenden Metallblech erzeugt ist, wobei dieser Versatz sowohl an der Außenoberfläche als auch an der Innenoberfläche des Mantelteils sichtbar und/oder greifbar ist. Der Benutzer kann dann beispielsweise mit dem Daumen an der Innenoberfläche anliegend sich nach unten auf der innen erscheinenden Stufe abstützen, während die Fingerspitzen an der Außenoberfläche anliegend sich nach oben an der außen erscheinenden Stufe diese untergreifend einhaken können.

Die Schüssel kann zur Verbesserung der Standfähigkeit einen im wesentlichen planen Bodenteil aufweisen. Es ist aber auch denkbar, im Bodenbereich eine nach außen konvex gekrümmte Außenoberfläche vorzusehen, damit die Schüssel beim Arbeiten beschränkt taumelfähig ist und damit Rühr- oder Schlagbewegungen sich optimal anpassen kann.

Von der Anwendungsergonomie wie auch von der Herstellungstechnik her ist es vorteilhaft, wenn die Schüssel zumindest in der randferneren Mantelzone im wesentlichen noch sphärisch gekrümmt ist. Bei relativ niedrigen Schüsseln ist es denkbar, daß sie auch in der randnahen Mantelzone im wesentlichen noch sphärisch gekrümmt ist, mit annähernd gleichem Krümmungsradius wie in der randferneren Mantelzone und ggf. auch in dem Bodenbereich. Bei höheren Schüsseln mag es vorteilhaft sein, wenn eine Mantellinie - in einem achsenthaltenden Schnitt betrachtet - in der randnahen Mantelzone an ihrer Außenoberfläche im wesentlichen geradlinig und in der randferneren Mantelzone an der Außenoberfläche im wesentlichen kreisbogenförmig verläuft.

Im Hinblick auf optimale Reinigungsmöglichkeit der an sich schwer zu reinigenden Außenoberfläche der randnahen Mantelzone einschließlich Randvorsprung ist es vorteilhaft, wenn die Außenoberfläche der randnahen Mantelzone und des Randvorsprungs hochglanzpoliert ist. Eine hochglanzpolierte Außenoberfläche in diesem Bereich ist nicht nur von der Reinigung her vorteilhaft, sondern auch deshalb vorteilhaft, weil Schmutz dann für den Benutzer in diesem Bereich leicht zu erkennen ist, so daß Schüsseln, die entweder nicht oder nur unzureichend gereinigt worden sind, dort sofort erkannt werden können.

Die Rauheit an der Außenoberfläche der randferneren oder polnahen Zone kann beispielsweise durch Behandldung mit Abrasivmitteln durchgeführt werden, z.B. mit Schleifpapier, welches ggf. auf einer der Mantellinie angepaßten Schablone befestigt sein kann, wobei die Aufnahmefläche an der Schablone bevorzugt derartig nachgiebig ist, daß sich über die ganze Länge der Mantellinie ein gleichmäßiger Anpreßdruck ergibt.

Für das Festhalten der Schüssel, sei es mit der offenen Hand und gespreizten Fingern, sei es mit der körperfern an der Schüssel anliegenden, die Schüssel gegen den Körper des Benutzers drückenden Hand, ist es besonders günstig, wenn die Rauheit in der randferneren Zone durch in Umfangsrichtung verlaufende Riefen gebildet ist.

Aus Gründen der einfachen Reinigung und der Behandlung von Ankleberesten des zu bearbeitenden Guts ist es von Vorteil, wenn die Innenoberfläche der Schüssel zumindest außerhalb des Bodenbereichs hochglanzpoliert ist.

Herstellungs- und reinigungstechnisch ist es besonders vorteilhaft, wenn die Außenoberfläche der randnahen Mantelzone gegenüber der Außenoberfläche der randferneren Mantelzone um 0,5 - 2 mm nach radial außen versetzt ist.

Für die Randgestaltung erweist es sich günstig, wenn der Randvorsprung gegenüber der Außenoberfläche der randnahen Mantelzone um 1 - 6 mm, vorzugsweise 2 - 4 mm, vorspringt. Bei Einhaltung dieser Dimensionen ist einerseits im Fall eines Anpressens der Schüssel gegen den Körper des Benutzers ein sicherer Halt gewährleistet, andererseits kann es nicht zu schmerzhaften Quetschungen kommen, da vorher die Außenoberfläche der Schüssel zur großflächigen Anlage an den Körper gelangt.

Für das Festhalten der Schüssel kann es auch vorteilhaft sein, wenn die Außenoberfläche des Bodenteils gerauht ist, vorzugsweise mit einer Rauheit entsprechend der Rauheit an der Außenoberfläche der randferneren Mantelzone. Es tritt dann eine verbesserte Haftung auf einer Arbeitsfläche ein, insbesondere wenn die Schüssel gegen die Arbeitsfläche angedrückt ist.

Die Schüssel wird vorzugsweise aus Edelstahlblech hergestellt. Dieses erfordert zwar hochpräzise Ziehwerkzeuge und leistungsfähige Pressen, hat aber den Vorteil der Oberflächen- und Formbeständigkeit und gibt der Schüssel ein hochwertiges Erscheinungsbild. Eine ausreichende Deformationsbeständigkeit kann, insbesondere bei Einsatz von Edelstahlblechen, dann erzielt werden, wenn das Metallblech eine Wandstärke von 0,5 - 2 mm, vorzugsweise 0,8 - 1,5 mm, besitzt.

Eine erfindungsgemäße Schüssel kann nach einem Verfahren hergestellt werden, bei dem man eine im wesentlichen kreisrunde Metallblechplatine zwischen einem Konkavwerkzeug und einem Konvexwerkzeug mit der Schüsselform angepaßten Formgebungsflächen tiefzieht, und bei dem man beim Tiefziehvorgang durch entsprechende Gestaltung der Werkzeuge eine an der Außenoberfläche erkennbare Stufe zwischen einer randnahen Mantelzone und einer randferneren Mantelzone der Außenoberfläche erzeugt. Dabei kann man weiterhin so vorgehen, daß man die Außenoberfläche der randferneren Mantelzone und - gewünschtenfalls - eine plane Außenoberfläche des Bodenteils sodann einer abrasiven Aufrauhungsbehandlung unterwirft und daß man die Außenoberfläche der randnahen Mantelzone und - gewünschtenfalls - die Außenoberfläche des Randvorsprungs und die Innenoberfläche einer Hochglanzbehandlung unterwirft derart, daß die Grenze zwischen größerer Oberflächenrauheit in der Außenoberfläche der randferneren Mantelzone und geringerer Oberflächenrauheit in der Außenoberfläche der randnahen Mantelzone im Bereich der Stufe entsteht. Dabei kann man die Aufrauhungsbehandlung in der Weise durchführen, daß man abrasives Material in Kontakt mit der Außenoberfläche der randferneren Mantelzone und ggf. mit der Außenoberfläche des Bodenteils bringt, während die Schüssel um ihre Achse rotiert. Andererseits kann man eine Hochglanzbehandlung in der Weise durchführen, daß man textilartiges oder lederartiges Behandlungsgut in Kontakt mit der jeweils zu behandelnden Fläche bringt, während die Schüssel um ihre Achse in Rotation versetzt wird.

Die beiliegende Figur erläutert die Erfindung. Sie zeigt in der linken Hälfte einen achsenthaltenden Schnitt durch die erfindungsgemäße Schüssel und in der rechten Hälfte die Außenoberfläche der Schüssel.

In der beiliegenden Figur ist eine Schüssel ganz allgemein mit 10 bezeichnet, welche in einer Richtung A betrachtet eine kreisrunde Form besitzt. Die Schüssel 10 ist aus einem Metallblech 11, vorzugsweise aus einem Edelstahl, einstückig mit, wie aus der linken Hälfte der Figur ersichtlich, im wesentlichen gleichbleibender Wandstärke hergestellt.

Die Außenoberfläche der Schüssel 10 weist zwei Außenoberflächenbereiche 12 und 14 auf, zum einen den Außenoberflächenbereich 12 der in der Figur oberen randnahen Mantelzone und zum anderen den Außenoberflächenbereich 14 der randferneren Mantelzone oder polnahen Zone auf. Die beiden Außenoberflächenbereiche 12,14 sind durch eine Stufe 16 voneinander abgesetzt. Hierbei ist die Außenoberfläche 12 der randnahen Mantelzone durch die Stufe 16 gegenüber der Außenoberfläche 14 der randferneren Mantelzone radial nach außen versetzt, wobei der so gebildete Versatz sowohl an der Außenoberfläche bei B als auch an der Innenoberfläche bei C sichtbar ist, wie man in der Figur erkennen kann. Sowohl die randnahe Mantelzone als auch die randfernere Mantelzone der Schüssel 10 sind sphärisch gekrümmt.

Die Schüssel 10 schließt oben mit einem Randvorsprung 18 ab. Dieser Randvorsprung 18 ist radial auswärts gebogen und steht in radialer Richtung nur geringfügig über die Kontur der Außenoberfläche 12 der randnahen Mantelzone über. Die Auswärtsbiegung des Randvorsprungs 18 weist dabei einen stetigen Krümmungsverlauf 19 auf. An der in der Figur unteren Seite besitzt die Schüssel 10 einen zur Schüsselachse orthogonalen, planen Bodenteil 20.

Außen- und Innenoberfläche der Schüssel 10 weisen unterschiedliche Oberflächenqualitäten auf. Die Außenoberfläche 14 der randferneren Mantelzone sowie die Außenoberfläche 24 des Bodenteils 20 sind aufgerauht. Die Rauheit in der Außenoberfläche 14 ist, wie aus der rechten Hälfte der Figur ersichtlich, durch in Umfangsrichtung verlaufende Riefen 34 gebildet. Die Riefen in der Außenoberfläche 24 des Bodenteils 20 verlaufen konzentrisch.

Die Innenoberfläche 28 der randnahen Mantelzone und die Innenoberfläche 30 der randferneren Mantelzone sind hochglanzpoliert. Die Innenoberfläche 32 des Bodenteils 20 ist mit konzentrisch verlaufenden Riefen versehen; letztere kann aber auch poliert sein.

## Patentansprüche

1. Schüssel aus Metallblech, insbesondere für Speisenzubereitung in Haushalt und Restaurant, welche einen über die Außenoberfläche (12) einer randnahen Mantelzone des Mantelteils radial auswärts vorspringenden Randvorsprung (18) aufweist,
wobei die an den Randvorsprung (18) angrenzende Außenoberfläche (12) der randnahen Mantelzone von der Außenoberfläche (14) einer zum Pol oder Bodenteil hin anschließenden randferneren Mantelzone durch eine Stufe (16) oder Schwelle abgegrenzt ist,
dadurch gekennzeichnet,
daß die Stufe (16) oder Schwelle die Grenze zwischen größerer, durch Abrasivbehandlung erhaltener Oberflächenrauheit der Außenoberfläche (14) in der randferneren Mantelzone und geringerer Oberflächenrauheit der Außenoberfläche (12) in der randnahen Mantelzone bildet.

2. Schüssel nach Anspruch 1,
dadurch gekennzeichnet,
daß die Stufe (16) dadurch gebildet ist, daß die randnahe Mantelzone radial auswärts gegenüber der randferneren Mantelzone versetzt ist.

3. Schüssel nach einem der Ansprüche 1 und 2,
dadurch gekennzeichnet,
daß der Randvorsprung (18) durch Radialauswärtsbiegung des Metallblechs gebildet ist.

4. Schüssel nach Anspruch 3,
dadurch gekennzeichnet,
daß die Radialauswärtsbiegung mit - im achsenthaltenden Schnitt betrachtet - stetigem Krümmungsverlauf (19) an die randnahe Mantelzone anschließt.

5. Schüssel nach Anspruch 3 oder 4,
dadurch gekennzeichnet,
daß der Randvorsprung (18) im Bereich einer Randkante annähernd tangential an einer zur Schüsselachse orthogonalen, virtuellen Randebene anliegt.

6. Schüssel nach einem der Ansprüche 1 - 5,
dadurch gekennzeichnet,
daß die Stufe (16) durch Radialauswärtsversetzung des die randnahe Mantelzone bildenden Metallblechs gegenüber dem die randfernere Mantelzone bildenden Metallblech erzeugt ist, wobei dieser Versatz sowohl an der Außenoberfläche (12,14 bei C) als auch an der Innenoberfläche (bei B) des Mantelteils sichtbar und/oder greifbar ist.

7. Schüssel nach einem der Ansprüche 1 - 6,
dadurch gekennzeichnet,
daß sie einen planen Bodenteil (20) aufweist.

8. Schüssel nach einem der Ansprüche 1 - 7,
dadurch gekennzeichnet,
daß die randfernere Mantelzone sphärisch gekrümmt ist.

9. Schüssel nach Anspruch 8,
dadurch gekennzeichnet,
daß auch die randnahe Mantelzone sphärisch gekrümmt ist.

10. Schüssel nach einem der Ansprüche 1 - 7,
dadurch gekennzeichnet,
daß eine Mantellinie der Außenoberfläche (12,14) - in einem achsenthaltenden Schnitt betrachtet - in der randnahen Mantelzone im wesentlichen geradlinig und in der randferneren Mantelzone im wesentlichen kreisbogenförmig verläuft.

11. Schüssel nach einem der Ansprüche 1 - 10,
dadurch gekennzeichnet,
daß die Außenoberfläche (12) der randnahen Mantelzone und des Randvorsprungs (18) hochglanzpoliert ist.

12. Schüssel nach einem der Ansprüche 1 - 11,
dadurch gekennzeichnet,
daß die Rauheit in der Außenfläche (14) der randferneren Mantelzone in Umfangsrichtung verlaufende Riefen (34) aufweist.

13. Schüssel nach einem der Ansprüche 1 - 12,
dadurch gekennzeichnet,
daß die Innenoberfläche (30) der Schüssel (10) zumindest außerhalb des Bodenbereichs (32) hochglanzpoliert ist.

14. Schüssel nach einem der Ansprüche 1 - 13,
dadurch gekennzeichnet,
daß die Außenoberfläche (12) der randnahen Mantelzone gegenüber der Außenoberfläche (14) der randferneren Mantelzone um 0,5 - 2 mm nach radial außen versetzt ist.

15. Schüssel nach einem der Ansprüche 1 - 14,
dadurch gekennzeichnet,
daß der Randvorsprung (18) gegenüber der Außenoberfläche (12) der randnahen Mantelzone um 1 - 6 mm, vorzugsweise 2 - 4 mm, vorspringt.

16. Schüssel nach einem der Ansprüche 1 - 15,
dadurch gekennzeichnet,
daß die Außenoberfläche (24) des Bodenteils (20) gerauht ist, vorzugsweise mit einer Rauheit entsprechend der Rauheit in der Außenoberfläche (12) der randferneren Mantelzone.

17. Schüssel nach einem der Ansprüche 1 - 16,
dadurch gekennzeichnet,
daß das Metallblech ein Edelstahlblech ist.

18. Schüssel nach einem der Ansprüche 1 - 17,
dadurch gekennzeichnet,
daß das Metallblech eine Wandstärke von 0,5 - 2 mm, vorzugsweise 0,8 - 1,5 mm, besitzt.

19. Verfahren zur Herstellung einer Schüssel,
bei dem man eine im wesentlichen kreisrunde Metallblechplatine zwischen einem Konkavwerkzeug und einem Konvexwerkzeug mit der Schüsselform angepaßten Formgebungsflächen tiefzieht, und bei dem man beim Tiefziehvorgang durch entsprechende Gestaltung der Werkzeuge eine an der Außenoberfläche (12,14) erkennbare Stufe (16) zwischen einer randnahen Mantelzone und einer randferneren Mantelzone der Außenoberfläche erzeugt,
dadurch gekennzeichnet,
daß man die Außenoberfläche (14) der randferneren Mantelzone und - gewünschtenfalls - eine plane Außenoberfläche (24) des Bodenteils (20) sodann einer abrasiven Aufrauhungsbehandlung unterwirft und daß man die Außenoberfläche (12) der randnahen Mantelzone und - gewünschtenfalls - die Außenoberfläche des Randvorsprungs (18) und die Innenoberfläche (30) einer Hochglanzbehandlung unterwirft derart, daß die Grenze zwischen größerer Oberflächenrauheit in der Außenoberfläche (14) der randferneren Mantelzone und geringerer Oberflächenrauheit in der Außenoberfläche (12) der randnahen Mantelzone im Bereich der Stufe (16) entsteht.

20. Verfahren nach Anspruch 19,
dadurch gekennzeichnet,
daß man die Aufrauhungsbehandlung durch Kontakt eines abrasiven Materials mit der Außenoberfläche (14) der randferneren Mantelzone und gegebenenfalls der Außenoberfläche (24) des Bodenteils (20) durchführt, während die Schüssel (10) um ihre Achse rotiert.

21. Verfahren nach einem der Ansprüche 19 und 20,
dadurch gekennzeichnet,
daß man die Hochglanzbehandlung durch Kontakt des Metallblechs mit textilem oder lederartigem Behandlungsmaterial durchführt, während die Schüssel (10) um ihre Achse rotiert.

## Claims

1. Bowl made of sheet metal, especially for preparing food in the home and in a restaurant, which has a rim projection (18) projecting radially outwards from the outer surface (12) of a rim-adjacent envelope zone of the envelope part, wherein the outer surface (12) of the rim-adjacent envelope zone adjoining the rim projection (18) is demarcated from the outer surface (14) of a more rim-remote envelope zone adjoining the pole or base part by means of a step (16) or threshold, characterised in that the step (16) or threshold forms the boundary between a higher surface roughness obtained by abrasive treatment of the outer surface (14) in the more rim-remote envelope zone and a lower surface roughness of the outer surface (12) in the rim-adjacent envelope zone.

2. Bowl according to claim 1, characterised in that the step (16) is formed in that the rim-adjacent envelope zone is offset radially outwards relative to the more rim-remote envelope zone.

3. Bowl according to one of claims 1 and 2, characterised in that the rim projection (18) is formed by bending the sheet metal radially outwards.

4. Bowl according to claim 3, characterised in that the radially outward bend with a - viewed in the axis-containing section - continuous curvature shape (19) adjoins the rim-adjacent envelope zone.

5. Bowl according to claim 3 or 4, characterised in that the rim projection (18) in the region of a rim edge is approximately tangentially adjacent to a virtual rim plane orthogonal relative to the bowl axis.

6. Bowl according to one of claims 1 to 5, characterised in that the step (16) is produced by offsetting the sheet metal forming the rim-adjacent envelope zone radially outwards relative to the sheet metal forming the more rim-remote envelope zone, wherein said offset is visible and/or grippable both at the outer surface (12, 14 at C) and also at the inner surface (at B) of the envelope part.

7. Bowl according to one of claims 1 to 6, characterised in that it has a flat base part (20).

8. Bowl according to one of claims 1 to 7, characterised in that the more rim-remote envelope zone is spherically curved.

9. Bowl according to claim 8, characterised in that the rim-adjacent envelope zone is also spherically curved.

10. Bowl according to one of claims 1 to 7, characterised in that a surface line of the outer surface (12, 14) - viewed in an axis-containing section - extends in the rim-adjacent envelope zone substantially rectilinearly and in the more rim-remote envelope zone substantially in the shape of a circular arc.

11. Bowl according to one of claims 1 to 10, characterised in that the outer surface (12) of the rim-adjacent envelope zone and of the rim projection (18) is polished to a mirror finish.

12. Bowl according to one of claims 1 to 11, characterised in that the roughness in the outer surface (14) of the more rim-remote envelope zone has machining marks (34) extending in a peripheral direction.

13. Bowl according to one of claims 1 to 12, characterised in that the inner surface (30) of the bowl (10) is polished to a mirror finish at least outside of the base region (32).

14. Bowl according to one of claims 1 to 13, characterised in that the outer surface (12) of the rim-adjacent envelope zone is offset radially outwards by 0.5 to 2 mm relative to the outer surface (14) of the more rim-remote envelope zone.

15. Bowl according to one of claims 1 to 14, characterised in that the rim projection (18) projects by 1 to 6 mm, preferably by 2 to 4 mm, relative to the outer surface (12) of the rim-adjacent envelope zone.

16. Bowl according to one of claims 1 to 15, characterised in that the outer surface (24) of the base part (20) is roughened, preferably with a roughness corresponding to the roughness in the outer surface (12) of the more rim-remote envelope zone.

17. Bowl according to one of claims 1 to 16, characterised in that the sheet metal is a high-grade sheet steel.

18. Bowl according to one of claims 1 to 17, characterised in that the sheet metal has a wall thickness of 0.5 to 2 mm, preferably of 0.8 to 1.5 mm.

19. Method of manufacturing a bowl, whereby a substantially circular sheet metal plate is deep-drawn between a concave die and a convex die having moulding surfaces adapted to the bowl shape, and whereby during the deep-drawing process through suitable fashioning of the dies a recognisable step (16) is formed at the outer surface (12, 14) between a rim-adjacent envelope zone and a more rim-remote envelope zone of the outer surface, characterised in that the outer surface (14) of the more rim-remote envelope zone and - where desired - a flat outer surface (24) of the base part (20) is then subjected to an abrasive roughening treatment and that the outer surface (12) of the rim-adjacent envelope zone and - where desired - the outer surface of the rim projection (18) and the inner surface (30) are subjected to a mirror polish treatment in such a way that the boundary between a higher surface roughness in the outer surface (14) of the more rim-remote envelope zone and a lower surface roughness in the outer surface (12) of the rim-adjacent envelope zone is produced in the region of the step (16)

20. Method according to claim 19, characterised in that the roughness treatment is effected by contact of an abrasive material with the outer surface (14) of the more rim-remote envelope zone and optionally with the outer surface (24) of the base part (20) while the bowl (10) is rotating about its axis.

21. Method according to one of claims 19 and 20, characterised in that the mirror polish treatment is effected by contact of the sheet metal with textile or leather-like treatment material while the bowl (10) is rotating about its axis.

## Revendications

1. Récipient en tôle métallique, notamment pour la préparation de plats, à la maison et au restaurant, qui présente une saillie de bordure (18) faisant saillie radialement vers l'extérieur de la surface externe (12) d'une zone d'enveloppe proche de la bordure de la partie d'enveloppe, la surface externe (12), adjacente à la saillie de bordure (18), de la zone d'enveloppe proche de la bordure, étant délimitée à partir de la surface externe (14) d'une zone d'enveloppe faisant suite au pôle ou à la partie de fond et plus éloignée de la bordure, par un gradin (16) ou seuil, caractérisé en ce que le gradin (16) ou seuil constitue la limite entre une rugosité de surface plus grande obtenue par traitement abrasif de la surface externe (14) dans la zone d'enveloppe plus éloignée de la bordure, et une rugosité de surface moindre de la surface externe (12) dans la zone d'enveloppe proche de la bordure.

2. Récipient selon la revendication 1, caractérisé en ce que le gradin (16) est formé en ce que la zone d'enveloppe proche de la bordure est décalée radialement vers l'extérieur par rapport à la zone d'enveloppe plus éloignée de la bordure.

3. Récipient selon l'une des revendications 1 et 2, caractérisé en ce que la saillie de bordure (18) est formée par un cintrage radial vers l'extérieur de la tôle métallique.

4. Récipient selon la revendication 3, caractérisé en ce que le cintrage radial vers l'extérieur fait suite par une courbure (19) constante - vue dans une coupe contenant l'axe - à la zone d'enveloppe proche de la bordure.

5. Récipient selon la revendication 3 ou 4, caractérisé en ce que la saillie de bordure (18) s'applique à peu près tangentiellement contre un plan de bordure virtuel perpendiculaire à l'axe du récipient, dans la zone d'une arête de bordure.

6. Récipient selon l'une des revendications 1 à 5, caractérisé en ce que le gradin (16) est produit par décalage radial vers l'extérieur de la tôle métallique formant la zone d'enveloppe proche de la bordure par rapport à la tôle métallique formant la zone d'enveloppe plus éloignée de la bordure, ce décalage étant visible et/ou tangible aussi bien sur la surface externe (12, 14 en C) que sur la surface interne (en B) de la partie d'enveloppe.

7. Récipient selon l'une des revendications 1 à 6, caractérisé en ce qu'il comporte une partie de fond (20) plane.

8. Récipient selon l'une des revendications 1 à 7, caractérisé en ce que la zone d'enveloppe plus éloignée de la bordure est courbée sphériquement.

9. Récipient selon la revendication 8, caractérisé en ce que la zone d'enveloppe proche de la bordure est également courbée sphériquement.

10. Récipient selon l'une des revendications 1 à 7, caractérisé en ce qu'une génératrice de la surface externe (12, 14) - vue dans une coupe contenant l'axe - s'étend sensiblement en ligne droite dans la zone d'enveloppe proche de la bordure et sensiblement en arc de cercle dans la zone d'enveloppe plus éloignée de la bordure.

11. Récipient selon l'une des revendications 1 à 10, caractérisé en ce que la surface externe (12) de la zone d'enveloppe proche de la bordure et de la saillie de bordure (18) présente un poli miroir.

12. Récipient selon l'une des revendications 1 à 11, caractérisé en ce que la rugosité de la surface externe (14) de la zone d'enveloppe plus éloignée de la bordure présente des cannelures (34) s'étendant dans la direction périphérique.

13. Récipient selon l'une des revendications 1 à 12, caractérisé en ce que la surface interne (30) du récipient (10) présente un poli miroir au moins à l'extérieur de la zone de fond (32).

14. Récipient selon l'une des revendications 1 à 13, caractérisé en ce que la surface externe (12) de la zone d'enveloppe proche de la bordure est décalée radialement vers l'extérieur de 0,5 à 2 mm par rapport à la surface externe (14) de la zone d'enveloppe plus éloignée de la bordure.

15. Récipient selon l'une des revendications 1 à 14, caractérisé en ce que la saillie de bordure (18) fait sallie de 1 à 6 mm, de préférence de 2 à 4 mm, par rapport à la surface externe (12) de la zone d'enveloppe proche de la bordure.

16. Récipient selon l'une des revendications 1 à 15, caractérisé en ce que la surface externe (24) de la partie de fond (20) est rendue rugueuse de préférence avec une rugosité correspondant à celle de la surface externe (12) de la zone d'enveloppe plus éloignée de la bordure.

17. Récipient selon l'une des revendications 1 à 16, caractérisé en ce que la tôle métallique est une tôle d'acier spécial.

18. Récipient selon l'une des revendications 1 à 17, caractérisé en ce que la tôle métallique présente une épaisseur de paroi de 0,5 à 2 mm, de préférence de 0,8 à 1,5 mm.

19. Procédé de fabrication d'un récipient, dans lequel on fait subir un emboutissage profond à une platine de tôle métallique sensiblement circulaire, entre un outil concave et un outil convexe, dont les surfaces de formage sont adaptées à la forme du récipient, et dans lequel lors de l'emboutissage profond on produit, par une réalisation appropriée des outils, un gradin (16), visible sur la surface externe (12, 14), entre une zone d'enveloppe proche de la bordure et une zone d'enveloppe plus éloignée de la bordure, de la surface externe, caractérisé en ce que l'on soumet ensuite la surface externe (14) de la zone d'enveloppe plus éloignée de la bordure et - si on le souhaite - une surface externe (24) plane de la partie de fond (20) à un traitement abrasif destiné à la rendre rugueuse et en ce qu'on soumet la surface externe (12) de la zone d'enveloppe proche de la bordure et - si on le souhaite - la surface externe de la saillie de bordure (18) ainsi que la surface interne (30), à un traitement destiné à conférer un poli miroir, de manière que la limite entre la rugosité de surface plus importante de la surface externe (14) de la zone d'enveloppe plus éloignée de la bordure et la rugosité de surface moindre de la surface externe (12) de la zone d'enveloppe proche de la bordure, se situe dans la région du gradin (16).

20. Procédé selon la revendication 19, caractérisé en ce qu'on exécute le traitement destiné à conférer une rugosité par contact d'un matériau abrasif avec la surface externe (14) de la zone d'enveloppe plus éloignée de la bordure et éventuellement de la surface externe (24) de la partie de fond (20), pendant que le récipient (10) tourne autour de son axe.

21. Procédé selon l'une des revendications 19 et 20, caractérisé en ce qu'on exécute le traitement destiné à conférer un poli miroir par contact de la tôle métallique avec un matériau de traitement textile ou du genre d'un cuir, pendant que le récipient (10) tourne autour de son axe.
